# DEMANDE DE BREVET EUROPEEN

(11) **EP 3 528 182 A1**
(43) Date de publication de la demande: **21.08.2019**
(21) Numéro de dépôt: 19157539.8
(22) Date de dépôt: 15.02.2019
(51) Int. Cl.: G06N 5/02, G06Q 10/00

(54) **ACCESSEUR SEMANTIQUE ET BASE DE CONNAISSANCES**

(30) Priorité: 19.02.2018 FR 1851402
(71) Demandeur: Commissariat à l'Energie Atomique et aux Energies Alternatives, 75015 Paris (FR)
(72) Inventeur: POLI, Jean-Philippe, 75020 Paris (FR); BOUDET, Laurence, 91470 Les Molieres (FR); CORNEZ, Laurence, 78100 Saint Germain en Laye (FR); ESPINOSA, Bruno, 91120 Palaiseau (FR)
(74) Mandataire: Brunelli, Gérald

(57) **Abrégé**

L'invention concerne des procédés mis en oeuvre par ordinateur pour recevoir des données depuis une ou plusieurs sources de données; modifier les données reçues dans un ou plusieurs accesseurs sémantiques associés à un système à base de connaissances, le système à base de connaissances étant extensible par une ou plusieurs extensions, une extension spécifiant du vocabulaire comprenant des mots ou objets et un ou plusieurs opérateurs logiques. Le fond et/ou la forme des données reçues peuvent être modifiés. Des mots de vocabulaire et/ou des opérateurs peuvent être ajoutés. Différents types de logique peuvent être implémentés. Les données manipulées, e.g. sémantiquement enrichies ou mises en commun, peuvent être interrogées, notamment via des interfaces graphiques spécifiques. Plusieurs accesseurs, arrangés en série ou en parallèle, peuvent coopérer ou être mis en compétition. Des exemples métier sont décrits (bâtiment, traitement d'images notamment IRM, système d'information géographique, etc.)

## Description

### Domaine de l'invention

L'invention concerne le domaine du traitement de l'information et en particulier les systèmes experts ou les systèmes à base de connaissances.

### Etat de la Technique

Un système expert est une brique logicielle d' « intelligence artificielle » visant à imiter le raisonnement humain sur un problème donné. Avec des variables d'entrée, un système expert retourne une réponse sous forme de variables de sortie.

Les systèmes experts sont généralement conçus de manière à n'implémenter qu'une seule fois leur moteur d'inférence. Une base de faits est enrichie par application d'une base de connaissances (généralement instanciée sous forme de règles). Une base de règles (constituée d'un ou plusieurs fichiers séparés) permet l'application d'un système expert à un problème donné.

En pratique, les systèmes experts utilisés dans l'industrie sont souvent des systèmes ad hoc. Dans le meilleur des cas, les systèmes experts existants sont des systèmes spécialisés pour un secteur d'activité particulier comme les BRMS (Business Rule Management Systems). Ce type d'implémentation permet d'avoir un vocabulaire pré-programmé et des interfaces compatibles avec le système d'information d'une entreprise. Les systèmes experts sont donc souvent spécifiques à des domaines techniques précis.

En vue du développement d'un système expert de type générique, une difficulté significative (régulièrement rencontrée) réside dans l'accès aux données auxquelles le moteur d'inférence doit être appliqué. L'écriture de règles logiques est particulièrement difficile, car les règles produites doivent être compatibles avec les données qui sont accessibles. Or les données peuvent être de nature et de format très divers. Les domaines techniques peuvent par exemple concerner le scoring bancaire (pour savoir si un prêt peut être accordé à un client), la fraude bancaire, les ressources humaines d'une entreprise, le pilotage de hauts-fourneaux, la construction de bâtiments, etc. Ces domaines peuvent avoir peu en commun (en termes de vocabulaire, de format et de nature des données, etc.).

Sans viser un système expert universel, développer un système expert générique (au sens d'applicable au plus grand nombre de domaines possibles) se heurte à de nombreuses difficultés.

Il existe un besoin pour des procédés et des systèmes permettant d'appliquer un même système expert à une pluralité de domaines techniques.

### Résumé de l'invention

L'invention concerne des procédés mis en oeuvre par ordinateur pour recevoir des données depuis une ou plusieurs sources de données; modifier les données reçues dans un ou plusieurs accesseurs sémantiques associés à un système à base de connaissances, le système à base de connaissances étant extensible par une ou plusieurs extensions, une extension spécifiant du vocabulaire comprenant des mots ou objets et un ou plusieurs opérateurs logiques. Le fond et/ou la forme des données reçues peuvent être modifiés. Des mots de vocabulaire et/ou des opérateurs peuvent être ajoutés. Différents types de logique peuvent être implémentés. Les données manipulées, e.g. sémantiquement enrichies ou mises en commun, peuvent être interrogées, notamment via des interfaces graphiques spécifiques. Plusieurs accesseurs, arrangés en série ou en parallèle, peuvent coopérer ou être mis en compétition. Des exemples métier sont décrits (bâtiment, traitement d'images notamment IRM, système d'information géographique, etc.)

Avantageusement, les procédés et systèmes selon l'invention permettent d'associer (e.g. connecter, relier, compléter) un système à base de connaissances à une ou plusieurs sources de données afin qu'il puisse alimenter son raisonnement avec celles-ci.

Avantageusement, les procédés et systèmes selon l'invention permettent d'accroître l'expressivité d'une base de connaissances (par exemple, par ajout d'extensions à cette base de connaissances).

Avantageusement, les procédés et systèmes selon l'invention facilitent l'*expressivité* d'un système expert, par exemple lors de la saisie et de la manipulation de règles. L'expressivité d'un modèle à base de connaissances désigne sa capacité à pouvoir représenter ces connaissances (représentation des relations entre objets, manipulation et modification des objets, etc.). Selon les modes de réalisation, le procédé permet aux utilisateurs de rédiger leurs propres règles et confère de la flexibilité pour modéliser des connaissances.

Avantageusement, l'architecture du procédé permet de conserver la généricité d'un moteur d'inférence. Avec un même système de raisonnement (e.g. un moteur d'inférence pour un système expert), différentes sources de données peuvent être manipulées.

Avantageusement, les procédés et systèmes selon l'invention permettent la réutilisation de code logiciel et des données, permettant ainsi des économies de coûts et des gains de temps.

### Description des figures

D'autres caractéristiques et avantages de l'invention apparaîtront à l'aide de la description qui suit et des figures des dessins annexés dans lesquels:
La figure 1 illustre l'architecture générale des procédés et systèmes selon l'invention ;
La figure 2 illustre qu'une pluralité de sources de données et d'accesseurs sémantiques peut être manipulée ;
La figure 3 illustre un exemple de mode de réalisation de l'accesseur sémantique et du système à base de connaissances ;
La figure 4 illustre des exemples d'étapes selon un mode de réalisation de l'invention.

### Description détaillée de l'invention

Des définitions sont présentées ci-après.

Une « donnée » est un élément numérique brut, qui n'a pas encore été interprété, e.g. mis en contexte. Par exemple une donnée est une valeur numérique (exemple : 29).

Une « information » est une donnée interprétée (ou contextualisée). Par exemple, lorsque le type de la donnée est connue (exemple degré Celsius), une information est 29°C.

Une « connaissance » est une information « comprise », e.g. assimilée et éventuellement utilisée ou qui permet d'aboutir à une action (exemple « Si la température excède 29°C alors ouvrir la fenêtre »)

Un « système à base de connaissances » ou une « base de connaissance » est matériellement une base de données qui regroupe des connaissances spécifiques à un domaine technique ou un métier donné (par exemple la gestion de bâtiments, le pilotage de hauts-fourneaux, etc.). Les connaissances peuvent être sous une forme exploitable par un ordinateur. Un système à base de connaissances contient généralement des objets ou des faits ou d'autres représentations ainsi que des règles reliant ces objets (e.g. relations entre objets dans une ontologie). Dans un système à base de règles, un moteur d'inférence effectuant des raisonnements déductifs logiques peut déterminer de nouveaux faits à partir des objets.

Un système à base de connaissances (par exemple un « système expert ») est une base de données et du code exécutable qui comprend au moins : a) une base de connaissances (par exemple une base de règles pour un système expert) ; b) des observations (par exemple une base de faits pour un système expert) ; c) un ou plusieurs mécanismes de « raisonnement » (par exemple un moteur d'inférence pour un système expert) et parfois d) une ou plusieurs interfaces graphiques ou utilisateurs (par exemple une interface de saisie de règles et de visualisation des résultats pour un système expert).

Un système expert peut notamment comprendre un ou plusieurs mécanismes permettant de remonter aux « causes » ayant produit des faits observés (propriété dite « *backward* » en anglais, propriété d'observation).

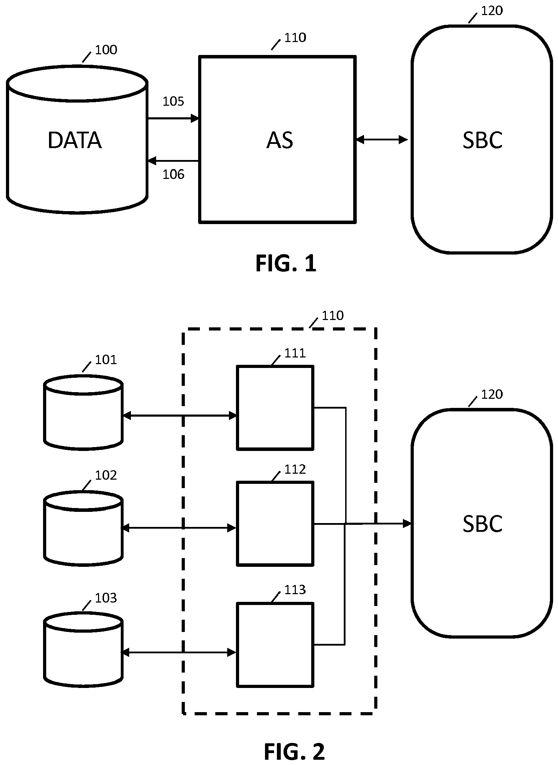

La figure 1 illustre l'architecture générale des procédés et systèmes selon l'invention. La figure 1 montre une ou plusieurs sources de données 100, lesquelles peuvent être manipulées en tout ou partie par un accesseur sémantique 110, ce dernier alimentant à son tour un système à base de connaissances 120.

Les sources de données 100 peuvent être variées. Les entrées peuvent être de toute nature (e.g. analogique, numérique ou symbolique. Les sources de données peuvent se matérialiser informatiquement par une base de données, un fichier, un ensemble de fichiers, etc.

La fonction d'un accesseur sémantique 110 est de lier (associer, relier) des données parmi les sources de données hétérogènes et/ou non structurées 100 aux données structurées du système à base de connaissances 120.

Le terme « accesseur » dans l'expression « accesseur sémantique » souligne l'accès aux données, préalable à la lecture et/ou écriture. Le terme « sémantique » souligne les relations entre objets manipulés. Ces relations peuvent être présentes et/ou futures, i.e. existantes et/ou potentielles.

Dans un mode de réalisation, un accesseur sémantique 110 accède 105 aux données. Le terme accéder renvoie à la capacité de recevoir (passive mais aussi active i.e. « *retrieval* »). Un accesseur sémantique contient donc l'implémentation suffisante pour accéder physiquement aux données et au moins les lire (e.g. droits d'accès, droit de lecture, ports, etc.). Par exemple, un accesseur sémantique peut comprendre un connecteur de base de données (« database wrapper ») (pour accéder aux données sources). Par exemple, l'accesseur sémantique peut effectuer des conversions de données du format XML vers le format IFC et inversement.

Dans un mode de réalisation, optionnel avantageux, un accesseur sémantique 110 peut agir 106 sur les données ou sources de données. Par exemple, un accesseur sémantique peut écrire dans les sources de données (par exemple pour changer des valeurs, convertir des données dans le bon format), peut déterminer que certaines données peuvent être verrouillées, etc.

Un accesseur sémantique comprend généralement du vocabulaire et des opérateurs, permettant d'exprimer des connaissances.

Dans un mode de réalisation, un accesseur sémantique 110 peut comporter des ressources de stockage (à court, moyen ou long terme). Par exemple, un accesseur sémantique peut comprendre un ou plusieurs caches de données.

Un système à base de connaissances 120 peut être un système expert flou. Dans un cas particulier, un système à base de connaissances peut être un système dans lequel les connaissances peuvent être représentées sous forme de règles formalisées avec la logique floue.

La figure 2 illustre qu'une pluralité de sources de données et d'accesseurs sémantiques peut être manipulée.

D'un domaine technique spécialisé à un autre, la nature des données à traiter peut changer. Par la suite, le vocabulaire et les opérateurs utilisés dans les règles peuvent aussi changer. Du fait de l'entropie (de la diversité, de la variabilité) des données sources 100 à manipuler, une pluralité d'accesseurs sémantiques peut être mise en oeuvre.

Dans le domaine médical par exemple, afin de diagnostiquer l'état d'un patient, différentes caractéristiques physiques mesurées peuvent être déclarées (température, glycémie, rythme cardiaque, ECG, EEG, etc.). Une règle de diagnostic telle que «Si 20% des patients sont contaminés alors ... » est nécessairement spécifique (nécessité d'une entrée relative à la proportion de patients contaminés ou d'une méthode de calcul à partir d'une base de données patients). Ce domaine technique ne peut donc pas relever d'un système générique universel. Avantageusement, il peut être utilisé du vocabulaire spécifique et/ou des opérateurs spécifiques (utilisés dans les règles). Dans cet exemple, les données médicales 101 seront lues et/ou écrites par un accesseur sémantique 111, puis assimilées dans le système à base de connaissances 120.

Dans le domaine de la construction, les différents objets considérés peuvent être agencés selon des hiérarchies très particulières (sols, plafonds, murs mitoyens, porteurs, étages, entresols, etc.). Un plan de bâtiment est un modèle complexe avec une hiérarchie (des étages qui appartiennent à un bâtiment, des appartements qui appartiennent à un étage, des pièces qui appartiennent à un appartement). Chaque entité (pièce, étage, etc.) peut avoir ses propres propriétés numériques ou symboliques. Ici encore, un vocabulaire spécifique et des opérateurs spécifiques peuvent être nécessaires. Dans cet exemple, les données de construction 102 seront lues et/ou écrites par un accesseur sémantique 112, puis assimilées dans le système à base de connaissances 120.

Dans un mode de réalisation, chaque source de données complexes est associée avec son propre accesseur sémantique.

Dans un mode de réalisation, plusieurs sources de données complexes sont associées avec un même accesseur sémantique.

Dans un mode de réalisation, une même source de données est associée avec plusieurs accesseurs sémantiques (e.g. redondance, versioning, etc.)

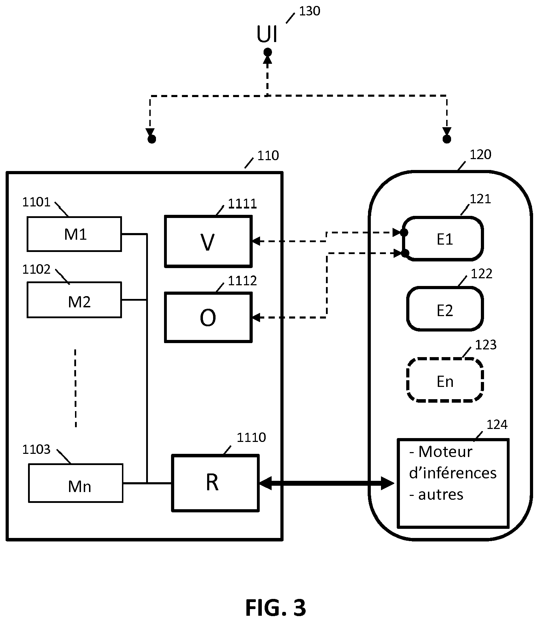

La figure 3 détaille le fonctionnement d'un accesseur sémantique 110 et d'un système à base de connaissances 120.

Selon les modes de réalisation, un accesseur sémantique comprend différents composants, décrits ci-après.

Dans un mode de réalisation, l'accesseur sémantique comprend du vocabulaire 1111 et des opérateurs 1112. Les opérateurs appliqués sur ces données déterminent les relations existantes - ou possibles - entre les éléments de vocabulaire. Ce vocabulaire et ces opérateurs permettent d'exprimer des connaissances et/ou d'appliquer des opérations.

Par exemple, si la source de données est un fichier de tableur de calcul, les connaissances peuvent concerner le vocabulaire (objets) comprenant des lignes, des colonnes, des cellules. Il est ensuite possible de déterminer qu'une cellule est vide dans une feuille d'un tableur de calcul (ou le ratio de cellules vides, etc.).

De manière optionnelle, ces différents noms d'objets peuvent être liés entre eux par des opérateurs au sein d'un modèle. Dans l'exemple de la feuille d'un tableur de calcul, les lignes, colonnes et onglets ont une relation particulière et un modèle hiérarchique peut être déterminé.

Dans un mode de réalisation facultatif, un accesseur sémantique comprend ou est associé à un ou plusieurs modèles informatiques (par exemple 1101, 1102, 1103).

Un modèle informatique comprend un ou plusieurs modèles de données parmi un graphe, un dictionnaire, une liste, un tableau, un fichier UML, un modèle statistique, un méta-modèle, un modèle entité-relation, un thésaurus, etc. Un modèle peut être intrinsèque aux données, mais un modèle peut être extrinsèque ou complémentaire dans la mesure où il peut faciliter un raisonnement (articulation et application de règles sur ces données).

Les modèles définissent des relations entre des objets (par exemple les adjacences entre pièces, angles entre murs). Les modèles servent pour les étapes de requête (trouver la bonne information dans le bon contexte). La recherche peut donc être complexe, au sens où les données sont structurées.

Les modèles peuvent être interrogés par un système de requête 1110 en lien avec un moteur d'inférence 124. Ce moteur d'inférence 124 peut accéder aux modèles de données (via le système de requête 1110), lesquels peuvent être complexes ou variables (par exemple le plan de bâtiment ou un fichier de tableur).

Au sein d'un accesseur sémantique, ou associée à celui-ci, une interface utilisateur (UI) 130 peut permettre la manipulation (e.g. ajout, suppression, modification, substitution, généralisation, etc.) du vocabulaire et/ou des opérateurs. Dans un mode de réalisation, l'interface utilisateur peut aussi concerner les extensions du système à base de connaissances.

Dans un mode de réalisation, l'interface utilisateur peut comprendre une interface d'affichage graphique (texte et/ou image), des entrées notamment de saisie (e.g. clavier, écran tactile, capture de gestes, commandes vocales, etc.) et des sorties (e.g. retours haptiques, visuels, sonores, vibratiles, etc.).

Par exemple, une interface utilisateur peut utiliser un vocabulaire spécialisé lors de la saisie des règles (« portes » ou « pièces » dans le cas de la manipulation d'un plan de bâtiment par exemple), l'affichage des résultats, la justification ou toute autre entrée ou sortie du système expert. L'utilisateur, par exemple en production, peut exploiter une source de données selon un format commun (e.g. fichier IFC pour un plan de bâtiment, un fichier de tableur).

Dans un mode de réalisation, des interfaces graphiques spécifiques 130 peuvent permettre d'enrichir les opérateurs et le vocabulaire (interfaces graphiques de saisie des règles d'un système expert). Inversement, les opérateurs et le vocabulaire peuvent enrichir les interfaces.

Dans un mode de réalisation, le vocabulaire peut prendre la forme d'une ontologie. Dans un mode de réalisation, une ontologie peut être une ontologie floue (représentation du vocabulaire comme un ensemble de concepts liés par des relations). Dans un mode de réalisation, une ontologie peut comprendre des concepts, des relations, des axiomes et des instances.

Dans un mode de réalisation, l'accesseur sémantique 110 (notamment via 1110) peut fournir au système de raisonnement 124 des moyens d'exécuter des requêtes sur les modèles lorsqu'il a besoin d'accéder et de raisonner sur des parties spécifiques de ces derniers (par exemple pour dupliquer une connaissance sur l'ensemble des objets de même type).

Un système à base de connaissances 120 peut comprendre un ou plusieurs composants, décrits ci-après.

Un système à base de connaissances peut notamment comprendre (éléments non représentés individuellement 124) : 1) du vocabulaire ; 2) des opérateurs ; 3) des règles e.g. « si ... alors » ; 4) un moteur d'inférence, i.e. des règles de manipulation des règles ; 5) des ressources d'entrée/sortie (communication bidirectionnelle ; 6) optionnellement, une ou plusieurs interfaces utilisateur.

Le système à base de connaissances selon l'invention peut ne pas être spécialisé (par domaine technique ou par métier) à l'initialisation. Il peut comprendre des objets prédéfinis, ou être vide à l'initialisation.

Dans un mode de réalisation, le système à base de connaissances peut être spécifique et propriétaire. Dans un mode de réalisation, le système à base de connaissances peut être un système du commerce qui a été modifié. Le code source du logiciel de ce système peut être modifié et étendu pour permettre les fonctionnalités des plugins ou extensions (« fork » ou « hack »).

Le système à base de connaissances peut stocker, à court, moyen ou long terme, en tout ou partie, les données modifiées par un ou plusieurs accesseurs sémantiques. Certaines données manipulées par l'accesseur sémantique peuvent en effet être assimilées i.e. stockées dans le système à base de connaissances, tandis que d'autres seront « oubliées ».

Dans un mode de réalisation, les différentes versions du système à base de connaissances peuvent être stockées au cours du temps : le système peut être versionné et sauvegardé. Dans un mode de réalisation, les différentes versions du système peuvent être sauvegardées (« versioning »). En particulier, des copies des versions antérieures (e.g. « snapshots ») peuvent être conservées de manière à permettre des retours en arrière (si nécessaire). Dans un mode de réalisation, le système à base de connaissances ne peut que « croître » (augmentation de son expressivité). A minima une copie de l'état initial du système à base de connaissances est conservée.

Dans un mode de réalisation, le système à base de connaissances selon l'invention comprend en outre (ou peut être interfacé avec) une ou plusieurs « extensions », qui se « greffent » au système.

Un système à base de connaissances peut donc comprendre une ou plusieurs extensions (par exemple 121, 122, 123), comprenant chacune du vocabulaire et des opérateurs (de type Booléen ou selon une autre logique).

Le système comprenant l'accesseur sémantique et le système à base de connaissances et son système d'extensions modifiables permet *in fine* l'import dans le système à base de connaissances de données spécifiques métier (données brutes ou sources).

Avantageusement, les systèmes et procédés selon l'invention permettent d'ajouter et/ou de supprimer et/ou de modifier et/ou d'accumuler et/ou d'enrichir et/ou de moduler et/ou d'atténuer et/ou de compléter le système à base de connaissances.

Une « extension » (ou « plugin ») comprend (ou spécifie) un ou plusieurs opérateurs logiques (e.g. « APRES QUE ») et du vocabulaire comprenant une pluralité d'objets (e.g. noms, faits, valeurs, etc.). Les objets peuvent avoir des attributs ou des méta-données (e.g. type, catégorie, quantité, qualité, indice de confiance, etc.). De fait, une extension peut comprendre des règles logiques (une règle logique est un ensemble articulé d'opérateurs logiques et d'objets). Par exemple, une règle peut être « B APRES QUE A ». Une règle (ou partie de règle ou prémisse ou proposition) peut s'appliquer à un ou plusieurs objets.

Une extension peut parfois être modifiable (elle peut être modifiée). En particulier, une extension peut être configurable (certains attributs prédéfinis peuvent être modifiés). Une extension configurable peut, de fait, être modifiée ; elle peut aussi rester dans un état modifiable.

Dans un mode de réalisation, au moins une extension est modifiable. Dans certains contextes, le système à base de connaissances n'offre qu'un seul point de contrôle (au sens où le système est contrôlable du fait des modifications qui peuvent être apportées via les extensions).

Dans un mode de réalisation, toutes les extensions associées au système à base de connaissances peuvent être modifiables. Dans certains contextes, le système à base de connaissances offre un nombre maximal de points de contrôle.

Dans un mode de réalisation, au moins une extension est non-modifiable.

Dans un mode de réalisation, aucune extension associée au système à base de connaissances n'est modifiable. Le système peut être invariant.

Dans un mode de réalisation, certaines extensions associées au système à base de connaissances peuvent être modifiables et d'autres peuvent ne pas l'être. Dans certains contextes, le système à base de connaissances offre plusieurs points de contrôle. Par exemple, l'ouverture ou la fermeture des points de contrôle (la latitude d'ajouter, de supprimer ou de modifier des plugins, e.g. leurs types, nature et/ou contenu) peut être le fait du fournisseur de service.

Dans un mode de réalisation, le procédé comprend les étapes consistant à modifier et/ou ajouter et/ou à supprimer des opérateurs et/ou un ou plusieurs objets de vocabulaire dans une ou plusieurs extensions.

Dans un mode de réalisation, il est possible de modifier et/ou d'ajouter et/ou de supprimer des opérateurs et/ou du vocabulaire (objets, noms, etc.).

Concernant l'enrichissement du vocabulaire, plusieurs types d'opérations sont possibles, notamment par ajout, modification, et modification des méta-données ou attributs des données. Du vocabulaire peut être ajouté (ajout pur et simple). Par exemple, il est possible d'ajouter des opérateurs, comme par exemple « AVANT (QUE) » ou « APRES (QUE) ». Un ou plusieurs mots peuvent être modifiés (à cette fin une ontologie ou un thésaurus peut être utilisé). Par exemple, l'élément de vocabulaire « fenêtre » peut être modifié en « encastrement » ou «trou» (ce qui permet en aval d'établir des correspondances ou de traiter avantageusement des données recensant d'autres types d'encastrements). Enfin, les attributs des données de vocabulaire peuvent également être manipulés ou modifiés: sans suppression effective d'une donnée, il est possible de modifier une métadonnée (description d'une donnée ou entrée).

Concernant l'enrichissement des opérateurs, plusieurs types d'opérations sont possibles, notamment par ajout, modification, et modification des méta-données ou attributs des opérateurs (le cas échéant).

Une extension peut être spécialisée (par exemple pour la gestion de bâtiment).

Une extension peut être générique, au sens où elle peut être ultérieurement spécialisée. De nombreux types d'extension sont possibles. Une extension peut être de type « visualisation » (e.g. visualisation de la base de règles). Une extension peut être de type « mathématique » (e.g. par exemple pour implémenter des fonctions de type MIN MAX). Une extension peut être de type « vérification » (e.g. pour vérifier la présence ou la possibilité d'erreurs, de collisions, de boucles infinies, de circularité, d'exceptions, etc.).

Certaines extensions peuvent être combinables (e.g. fongible, réutilisable, compatibles) avec d'autres, tandis que d'autres peuvent être incompatibles avec certains types d'extensions. Par exemple, une extension donnée peut être de type « temporel » et une autre peut être de type « spatial » ; la combinaison des deux peut dans certains cas conduire à une extension de type « spatio-temporel ».

Une extension peut parfois être « configurable » ou « paramétrable » (des champs ou attributs peuvent être prédéfinis et peuvent permettre de configurer rapidement une extension pour une application donnée). Une extension configurable peut être configurée, le cas échéant. Par exemple, une extension d'opérateurs temporels comprenant l'opérateur « avant » ou « égal à » peut être configurée en « juste avant que» ou « sensiblement égal à ». La faculté d'être configurable renvoie au fait que les modifications sélectionnées parmi des possibilités préalablement définies (prédéfinies), i.e. dans une liste fermée d'options (par opposition à une extension générique que l'utilisateur doit librement compléter pour la rendre spécifique à un domaine technique donné). Dans un mode de réalisation, une extension peut être configurable (ou auto-configurable), par exemple par apprentissage et/ou par mise à jour automatique.

Une extension peut être activable (activée de fait, ou non). Une extension peut être désactivable (désactivée de fait, ou non).

Les différentes extensions selon le cadre de l'invention peuvent avoir des cycles de développement ou des cycles de vie distincts (en matière de maintenance ou de support, de tarification, etc.). Des droits différents peuvent être associés aux différentes extensions (par exemple certaines peuvent être fournies avec leur code source, d'autres fournies uniquement en code objet). Des mesures techniques de protection, par exemple en matière d'utilisation peuvent être utilisées (i.e. DRM e.g. droits et nombre d'accès, limites temporelles et/ou géographiques, etc.). Des mesures techniques pour empêcher ou freiner l'ingénierie inverse peuvent également être utilisées.

Les modifications apportées aux extensions peuvent être effectuées par différentes entités. S'agissant de code logiciel, les délimitations de périmètre peuvent varier. Dans un mode de réalisation, l'accesseur sémantique est l'organe logique qui pilote (directement ou indirectement) les modifications apportées aux extensions. Dans un mode de réalisation, une entité (non représentée sur les figures) manipule et modifie les données. Dans un mode de réalisation, les modifications apportées aux extensions peuvent être apportées à intervalles temporel réguliers ou irréguliers (à la demande).

Dans un mode de réalisation, l'association entre l'accesseur sémantique et le système à base de connaissances est de type hiérarchique (e.g. maître-esclave). Dans un mode de réalisation, la relation est de type pair-à-pair (e.g. mécanismes de vote entre accesseurs). Différents modèles de dépendance, interdépendance ou indépendance entre accesseurs sémantiques, extensions et le système à base de connaissances peuvent être implémentés.

Des exemples de modes de réalisation sont décrits ci-après (mises en oeuvre dans différentes situations métier).

Dans un mode de réalisation, un domaine technique d'application est celui de la construction (par exemple de bâtiments, mais aussi de leur rénovation ou de leur maintenance), déjà évoqué précédemment. Les sources de données 100 peuvent être en l'espèce des fichiers de format IFC (pour « *Industry Foundation* Classes »). Ces fichiers permettent de représenter tout le cycle de vie d'un ou de plusieurs bâtiments sous forme numérique dans le cadre d'un processus de construction (« *Building Information Model* »). Chaque objet qui peut exister dans ce cycle de vie est représenté par une classe de ce modèle. Une maquette numérique du bâtiment peut être sauvegardée dans des fichiers texte (par exemple des fichiers XML et JSON), avec une syntaxe particulière. Cependant, de tels fichiers ne peuvent être que descriptifs (ils peuvent ne pas avoir été prévus pour une gestion par des systèmes de raisonnement. Afin de pouvoir écrire des connaissances sur le contenu de ces fichiers IFC (par exemple pour constituer un système d'aide à la décision pour les concepteurs de bâtiments, ou pour vérifier des normes de construction), le modèle descriptif peut avantageusement être enrichi et consolidé. Des accesseurs sémantiques selon l'invention (par exemple 111 et 112) peuvent lire 105 et lister les objets présents dans les fichiers IFC 100 (sans ordre particulier). Ces objets peuvent ensuite être classés ou filtrés. Par exemple, un « bâtiment » peut comprendre des « étages », lesquels comprennent des « pièces ». Des niveaux intercalaires e.g. « appartements » peuvent également être créés. Différents modèles (relations entre objets) 101 et 102 peuvent alors être déterminés, notamment des modèles hiérarchiques. Différents objets peuvent être associés entre eux (en l'espèce, les « portes » et les « fenêtres » peuvent être associées aux « murs », et les « murs » aux « pièces »). Dans ces modèles, de manière optionnelle, différents graphes peuvent être utilisés (par exemple des graphes d'adjacence). Les noeuds de ces graphes peuvent constituer les différents espaces d'un modèle donné. Les arêtes entre deux noeuds peuvent être non-dirigées et peuvent indiquer qu'il existe un moyen de passer d'une pièce à l'autre. Des graphes de distance peuvent également être utilisés. Les noeuds de ces graphes peuvent être les différents éléments du modèle considéré. Par ailleurs, les arêtes entre deux noeuds peuvent être dirigées et indiquer la distance entre les objets. Dans un mode de réalisation, tout ou partie des différents objets associés aux différents modèles considérés sont déterminés puis manipulés. Par exemple, un objet « porte » peut correspondre à un type IFC « IfcDoor » ; un objet « mur » peut correspondre à un type IFC « IfcWall » ; un objet « pièce » peut correspondre à un type IFC « IfcSpace » ; un objet « étage » peut correspondre à un type IFC « IfcStorey » ; etc. Additionnellement (et optionnellement), différents opérateurs peuvent être créés (déterminés et/ou utilisés), de manière à spécifier que deux pièces sont proches l'une de l'autre, ou qu'une pièce donnée est proche d'une issue de secours. Certains opérateurs peuvent nécessiter des calculs particuliers. Les correspondances établies par le procédé selon l'invention entre données sources 100 et données traitées par les accesseurs sémantiques 111 et 112 permettent alors d'écrire des règles comme « *si une pièce n'a pas de porte alors...* ». Le moteur d'inférence 124 sera en mesure de trouver les objets requêtés dans les modèles 1101 et 1102. Pour donner un exemple relatif au système de requêtes, afin de déterminer l'indice d'ouverture d'une pièce (rapport de la surface des ouvrants vitrés sur la surface au sol de la pièce), le procédé peut comprendre des étapes consistant à effectuer une requête pour déterminer ou identifier la pièce en question, recevoir les données relatives aux murs, puis aux ouvrants vitrés placés sur chacun des murs, puis la superficie au sol de la pièce avant de calculer le ratio souhaité. De manière plus générale, les requêtes peuvent être effectuées de différentes manières. Par exemple, afin de vérifier que toutes les portes des pièces des bâtiments ont des poignées, il est possible de lister tous les objets de type IfcDoor, sans ordre ni hiérarchie. Afin de vérifier que tout appartement a bien une porte, il peut être avantageux d'utiliser le modèle hiérarchique 101 préalablement déterminé.

Dans un mode de réalisation, un domaine technique d'application de l'invention est celui du *traitement d'images.* Pour traiter des images spécifiques (par exemple des images de boîtes de Pétri), il est avantageux de déterminer un accesseur sémantique spécifique à ce type d'images et aux contenus de ces images. Pour permettre l'écriture de règles de traitement d'images génériques 100, les accesseurs sémantiques 110 peuvent (par exemple) comprendre des étapes de conversion des formats d'image et d'écriture de règles (objets et opérateurs) portant sur les objets de l'image (e.g. lignes, coins, régions, histogrammes, pixels, groupements de pixels comme les « blobs », etc.). Les accesseurs sémantiques dédiés peuvent facultativement être associés à une ou plusieurs librairies de traitements d'image afin d'obtenir (d'extraire) et/ou de reconstruire ces caractéristiques. Comme il n'existe pas une unique façon d'extraire ce type d'information à partir du contenu des images, les accesseurs sémantiques peuvent déterminer des correspondances de vocabulaire et/ou utiliser des opérateurs existants (et/ou en ajouter). Par suite, les accesseurs sémantiques mobilisés peuvent déterminer une *chaîne de traitements* à utiliser (suite ordonnée d'opérations logiques réalisées sur les objets images). Par exemple, pour extraire des contours dans les contenus des images manipulées, il peut être avantageux de spécifier qu'une ou plusieurs images doivent être transformées en niveaux de gris, auxquels seront appliqués un filtre gaussien puis un filtre dérivatif. Dans certaines situations, les accesseurs sémantiques peuvent avantageusement implémenter des fonctions utilitaires facultatives (comme le fait de pouvoir déterminer la longueur des contours, par exemple). Des règles peuvent également être avantageusement déterminées et appliquées ; par exemple une règle peut être « *Pour tout contour dans l'image tel que la longueur du contour est supérieure à un seuil prédéfini, si l'intensité moyenne du contour est élevée alors sélectionner ce contour* ». En manipulant ce type de règles (à partir d'un vocabulaire et d'opérateurs), les accesseurs sémantiques 111 et 112 peuvent déterminer (directement et/ou indirectement, i.e. permettent de déterminer) des chaînes de traitements sur les images en entrée, avant d'appliquer ces règles sur les données sources 100 pour créer des collections d'objets. Ces objets pourront ensuite être interrogés selon les étapes décrites de l'invention.

Dans un mode de réalisation, un domaine technique d'application de l'invention est celui des systèmes d'informations géographiques (SIG). Cet exemple spécifique peut en effet également invoquer la mise en oeuvre des principes génériques décrits dans ce document. Dans cet exemple métier, des utilisateurs d'un moteur d'inférence peuvent souhaiter déterminer des relations entre des objets (e.g. des régions) de l'espace géographique. Les objets ou entités peuvent par exemple être des lieux publics, des rivières ou des routes. La représentation de ces objets (sur lesquels le moteur peut appliquer ses algorithmes de raisonnement) peut comprendre des objets géométriques (lignes, polygones, surfaces, etc.), dont les différents points peuvent être exprimés dans différents systèmes de coordonnées (e.g. système de référence cartésien, géodésique, etc.). Par suite, des requêtes peuvent être reçues, en vue de reconstruire des informations géographiques. Ces requêtes (d'origine humaine et/ou machine) peuvent par exemple émaner de services de cartographie proposés par les moteurs de recherche grand public contemporains, ou bien de SIG professionnels ou propriétaires. Les opérateurs logiques associés à ces requêtes peuvent par exemple être des opérateurs spatiaux pour exprimer des relations comme « au nord de », « à droite de », « proche de », ou « loin de » (non exhaustif). Par suite, à l'instar des exemples précédents, la restructuration selon l'invention des informations sources (initialement structurées ou non) permet avantageusement la constitution (e.g. sédimentation, structuration, etc.), la gestion et l'interrogation de ces données, de manière plus efficace et flexible que les systèmes d'origine.

Dans un mode de réalisation, le domaine technique d'application est celui du traitement du signal. A l'instar des principes évoqués précédemment pour le traitement d'images, un ou plusieurs accesseurs sémantiques peuvent manipuler des signaux (données sources). Ces signaux peuvent par exemple être issus de différents capteurs (senseurs et/ou actuateurs). Ils peuvent être de nature électromagnétique, optique, électronique, etc. Ils se traduisent par des données numériques (ou numérisées depuis des signaux analogiques). A partir de descriptions initiales symboliques de tout ou partie de ces signaux (données sources), les procédés selon l'invention peuvent permettre de classer et/ou catégoriser et/ou de reconnaître ces signaux (par exemple par comparaison dans des classes ou des catégories prédéfinies). Ces classes ou catégories peuvent par exemple désigner ou comprendre des signaux en croissance forte suivie d'une stagnation, des signaux bruités au-delà ou en-deçà de certains seuils, des signaux comprenant des caractéristiques de type pics ou crêtes, etc. Les accesseurs sémantiques selon l'invention peuvent permettre de représenter mathématiquement ces signaux (par exemple selon un niveau d'abstraction intermédiaire) et de les décrire à l'aide du vocabulaire selon l'invention (i.e. des associations entre résultats de calculs e.g. filtres d'une part et des mots prédéfinis d'autre part). Ces associations peuvent être déterministes, probabilistes, être réalisées de manière forcée (e.g. seuillée), etc. Par exemple, les mots de vocabulaire peuvent être « pic », valeur d' « amplitude », etc. Les opérateurs qui peuvent être mobilisés peuvent par exemple concerner la cinétique des signaux, ou leurs valeurs en temps, espace ou fréquence (non exhaustif). Des règles logiques peuvent permettre la classification des signaux. Des chaines de traitements peuvent être déterminées et mises en oeuvre. Dans certaines situations, des fonctions utilitaires facultatives peuvent être implémentées (par exemple pour segmenter le signal en sous-signaux homogènes). A partir des données sources 100, les collections d'objets 111 et 112 créées par les accesseurs sémantiques peuvent ensuite être interrogées (faire l'objet de requêtes).

Dans un mode de réalisation, le domaine technique d'application est celui de l'imagerie médicale par IRM (Imagerie par Résonance Magnétique). Des accesseurs sémantiques selon l'invention peuvent être mis en oeuvre pour manipuler les données sources traitées. En particulier, un accesseur sémantique spécifique IRM peut se fonder sur un accesseur sémantique tel que décrit précédemment concernant le traitement du contenu d'une image. Les images de type IRM sont spécifiques par rapport à des images au contenu quelconque, en ce qu'elles présentent des caractéristiques généralement précises et distinctives (e.g. en matière de bruit, de couleurs, etc.). Par suite, les algorithmes de traitement d'images invoqués par les accesseurs sémantiques IRM peuvent hériter (de tout ou partie) des fonctionnalités des accesseurs sémantiques décrits précédemment mais être de surcroit (sur) spécialisés pour manipuler spécifiquement les contenus d'images IRM. Cette spécification ou spécialisation peut par exemple consister à ajouter du vocabulaire typique du domaine métier, permettant en aval des traitements de données (ou de meilleurs traitements). Par exemple, dans le domaine de l'imagerie médicale, il est plus courant d'utiliser une terminologie « région » ou « segment » plutôt que « blob ». Ne pas injecter cette correspondance dans la chaîne de traitement peut induire des inefficacités, des occasions manquées de croiser les données, etc. A l'inverse, la manipulation et la description proprement « sémantique » (via des mots) peut permettre d'établir des mises en correspondances, des identités, des agrégations ou des fusions de données (pertinentes au regard de l'objectif final du traitement de données).

Le système de requête 1110 permet ensuite l'accès aux collections d'objets lorsque le moteur d'inférence 124 en a besoin.

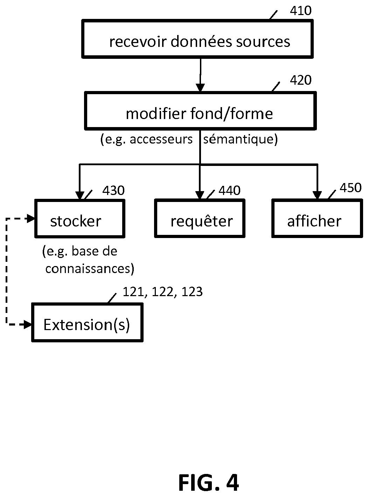

La figure 4 illustre des exemples d'étapes selon un mode de réalisation de l'invention.

Dans un mode de réalisation, le procédé mis en oeuvre par ordinateur, comprend les étapes consistant à : - recevoir (410) des données depuis une ou plusieurs sources de données (100) ; - modifier (420) les données reçues dans un ou plusieurs accesseurs sémantiques (111, 112, 113) associés à un système à base de connaissances 120, le système à base de connaissances étant extensible par une ou plusieurs extensions (121, 122, 123), une extension spécifiant du vocabulaire comprenant des mots ou objets (1111) et un ou plusieurs opérateurs logiques (1112).

Dans un mode de réalisation, l'étape consistant à modifier (420) les données dans un accesseur sémantique (111, 112, 113) comprend les étapes consistant à modifier le fond et/ou la forme des données reçues ou d'une copie des données reçues.

Dans un mode de réalisation, les données reçues peuvent être issues d'un ou de plusieurs accesseurs sémantiques (en parallèle ou en série).

Dans un mode de réalisation, l'étape consistant à modifier (420) le fond des données comprend une ou plusieurs étapes parmi les étapes consistant à sélectionner, filtrer, ajouter, supprimer, substituer une ou plusieurs données parmi les données reçues.

Dans un mode de réalisation, l'étape consistant à modifier la forme des données comprend une ou plusieurs étapes parmi les étapes consistant à convertir, formater, transcoder, encoder, décoder, compresser, ou décompresser une ou plusieurs données parmi les données reçues.

Dans un mode de réalisation, le procédé peut comprendre une ou plusieurs étapes de mise au format ou de reformatage des données (pour présentation au système de raisonnement).

Dans un mode de réalisation, le procédé peut comprendre une ou plusieurs étapes consistant à compléter la source de données (e.g. déduire les aires des pièces à partir de la géométrie de celles-ci)

Dans un mode de réalisation, le procédé comprend en outre l'étape consistant à stocker (430) tout ou partie des données modifiées dans le système à base de connaissances (120).

Dans un mode de réalisation, au moins une extension est non-modifiable.

Dans un mode de réalisation, le procédé comprend les étapes consistant à modifier et/ou ajouter et/ou à supprimer des opérateurs et/ou un ou plusieurs mots ou objets de vocabulaire dans une ou plusieurs extensions.

Dans un mode de réalisation, le procédé peut comprendre une ou plusieurs étapes consistant à fournir du vocabulaire à utiliser pour décrire la connaissance (e.g. utiliser le mot « pièce » dans une règle, sans que l'utilisateur ait à se soucier qu'il s'agisse d'une classe dans un langage de programmation)

Dans un mode de réalisation, un opérateur logique est un opérateur logique selon la logique binaire, logique floue, la logique possibiliste, la logique intuitionniste, la logique combinatoire, la logique modale, la logique propositionnelle, la logique polyvalente ou multivalente, la logique partielle, ou la logique para-consistante (une ou plusieurs logiques peuvent être implémentées).

Dans un mode de réalisation, les opérateurs logiques peuvent être ceux de la logique Booléenne. Dans certains modes de réalisation, les opérateurs logiques peuvent être ceux de la logique floue et/ou et/ou de la logique possibiliste de la logique intuitionniste et/ou de la logique combinatoire et/ou de la logique modale et/ou de la logique propositionnelle et/ou de la logique para-consistante.

Dans un mode de réalisation, plusieurs versions du système à base de connaissances sont sauvegardées au cours du temps.

Dans un mode de réalisation, le procédé comprend en outre l'étape consistant à associer des objets entre eux par l'intermédiaire d'un ou plusieurs modèles (1101, 1102, 1103).

Dans un mode de réalisation, le procédé comprend en outre l'étape consistant à interroger les sources de données (440) directement ou indirectement par l'intermédiaire d'un système de requête (1110).

Dans un mode de réalisation, le procédé peut comprendre une ou plusieurs étapes consistant à interroger les sources de données (440) via les accesseurs sémantiques (110) (e.g. faire en sorte que le système de raisonnement puisse interpréter « pour chaque pièce d'un appartement »)

Dans un mode de réalisation, le procédé comprend en outre les étapes consistant à :- afficher (450) une règle d'un accesseur et/ou d'une extension, une règle comprenant un ou plusieurs objets reliés par un ou plusieurs opérateurs ; - effectuer une analyse syntaxique de la règle ; - déterminer un ou plusieurs emplacements pour compléter la règle ;- afficher les emplacements déterminés et/ou afficher des objets et/ou des opérateurs prédéfinis compatibles avec les emplacements déterminés.

Dans un mode de réalisation, les emplacements peuvent être complétés par opérations de glisser-déposer (à la souris ou sur une interface tactile) ou par saisie manuelle.

Dans un mode de réalisation, le procédé comprend en outre les étapes consistant à :- afficher (450) des éléments affichables relatifs à une étape quelconque du procédé visant à modifier un ou plusieurs éléments parmi une donnée, un objet de vocabulaire, un opérateur, une métadonnée, un accesseur, une extension, une interrogation ou requête ; - recevoir confirmation de ladite étape.

De manière générale, le procédé selon l'invention peut être entièrement automatisé (en « boucle fermée »). Dans un mode de réalisation, une confirmation manuelle peut être avantageuse (« boucle ouverte »). Dans certains modes de réalisation la machine peut préempter des choix manuels si ces derniers ont été préalablement autorisés (par exemple par catégorie de décisions). La nature des opérations ou étapes à confirmer est variable ; de manière générale toute étape du procédé peut être régulée. Dans certains modes de réalisation, il est avantageux de réguler l'écriture de nouvelles règles (combinaisons de mots de vocabulaire et d'opérateurs) et de requêtes.

Dans un mode de réalisation, une pluralité d'accesseurs sémantiques modifie les données reçues en série. Avantageusement, au moins une partie des accesseurs sémantiques peuvent être spécialisés et être arrangés en série (e.g. « chaînés », effectuant des traitements en cascade).

Dans un mode de réalisation, une pluralité d'accesseurs sémantiques modifie les données reçues en parallèle. Au moins une partie des accesseurs sémantiques peuvent être arrangés en parallèle.

Dans un mode de réalisation, le procédé est exécuté dans un pool d'accesseurs qui sont exécutés en parallèle et qui effectuent leurs traitements de manière coopérative. Dans un mode de réalisation, le procédé est exécuté dans un pool d'accesseurs qui sont exécutés en parallèle et qui effectuent leurs traitements de manière concurrente.

Dans un mode de réalisation, plusieurs d'accesseurs sémantiques sont mis en concurrence pour modifier en parallèle les données reçues.

Dans un mode de réalisation, le procédé comprend en outre une étape consistant à sélectionner les données modifiées par la pluralité d'accesseurs sémantiques en fonction de critères factuels prédéfinis et/ou de règles prédéfinies.

Les accesseurs sémantiques peuvent être arrangés en série et/ou en parallèle.

Les accesseurs sémantiques et leurs différentes versions peuvent être plus ou moins adaptés à une tâche donnée, sans qu'il soit possible de déterminer *a priori* si ces accesseurs sont performants ou simplement adaptés à la tâche en cours. L'évaluation peut donc se faire *a posteriori.*

La sélection peut se faire selon différents critères prédéfinis. La sélection peut être subjective, i.e. pour une tâche spécifique donnée. La sélection peut être objective (selon des critères génériques). La sélection peut être le fait de l'utilisateur (qui par exemple peut valider ou invalider des résultats intermédiaires), le fait de la machine (selon des critères quantitatifs prédéfinis), ou une combinaison des deux. Dans certains modes de réalisation les accesseurs peuvent être associés avec des scores, des notes, des rangs, des priorités, etc. Dans certains modes de réalisation, les accesseurs peuvent mettre plus ou moins de temps pour produire leurs résultats. De manière générale, le procédé selon l'invention peut être entièrement automatisé (en « boucle fermée »).

Dans un mode de réalisation, une extension est activée après paiement ou un contrat d'utilisation. Au contraire, une extension peut être désactivée en cas de non-paiement (ou par exemple du non-respect d'une clause ou d'une obligation d'un contrat d'utilisation).

Dans un mode de réalisation, une entité logique est configurée pour supprimer des données. Les bases de connaissances augmentent (par construction). Néanmoins, dans certains cas, la capacité « à oublier » des données peut être avantageuse (e.g. temps de réponse, coût de stockage, non-pollution par des données non pertinentes voir résistance aux injections de données malformées ou malicieuses). Une entité logique, par exemple couplée ou gouvernée par le système d'évaluation des résultats peut contrôler la suppression de données dans les extensions associées aux accesseurs sémantiques. Un résultat considéré comme mauvais peut incrémenter un compteur (métadonnées) et conduire à terme à une suppression (seuillage).

Dans un mode de réalisation, les sources de données (100) comprennent des fichiers au format IFC, les mots ou objets du vocabulaire comprennent ou traduisent des hiérarchies entre lesdits mots ou objets, les opérateurs logiques comprennent des opérateurs traduisant des relations spatiales, la logique implémentée dans le moteur d'inférences (124) et/ou au moins un opérateur logique est de type logique floue, et un graphe d'adjacence est utilisé pour associer entre eux des mots ou objets dans un ou plusieurs modèles (1101, 1102, 1103).

Dans un mode de réalisation, les sources de données (100) comprennent des images, et les mots ou objets du vocabulaire comprennent des mots prédéfinis pour décrire le contenu desdites images.

Dans un mode de réalisation, les sources de données (100) comprennent des données médicales de type IRM, les mots ou objets du vocabulaire comprennent des mots prédéfinis pour décrire spécifiquement le contenu desdites images IRM.

Dans un mode de réalisation, les sources de données (100) comprennent des informations de type géographique, les mots ou objets du vocabulaire comprennent des mots prédéfinis notamment de type géométrique et orientation, et les opérateurs logiques comprennent des opérateurs de type proximité spatiale.

Dans un mode de réalisation, les sources de données (100) comprennent des informations relatives à des signaux, les mots ou objets du vocabulaire correspondent à des catégories de signaux prédéfinies.

Dans un mode de réalisation, les accesseurs sémantiques sont distribués dans un ou plusieurs réseaux et une requête est associée à une transaction dans une chaîne de blocs. Les accesseurs sémantiques peuvent être de différents niveaux de confiance. Dans un système centralisé, les différents accesseurs sont contrôlés par le fournisseur de services : il est donc possible de leur faire confiance (accesseur sémantique de confiance). Dans le cas d'une implémentation distribuée, voire hautement distribuée dans laquelle les accesseurs sémantiques peuvent être de différentes origines, il n'est pas toujours possible d'inspecter le code de chaque extension (ou de procéder à des vérifications automatique formelles de code). Dans cette situation, une implémentation sur une chaine de blocs peut être avantageuse, en matière de modèle de confiance, de sécurité et de modèle économique. Les requêtes communiquées dans le réseau sollicitent l'utilisation de ressources (capacité de calcul des accesseurs et présence/qualité des données). Ces requêtes peuvent donc s'accompagner (ou comprendre) des transactions. Ces transactions peuvent donner lieu au paiement de commissions (« fees »), lesquelles peuvent servir à monétiser l'utilisation des ressources demandées.

Dans un mode de réalisation, une extension d'un accesseur sémantique est modifiée par apprentissage, cet apprentissage étant de type supervisé ou non-supervisé ou profond. La rétroaction génération/évaluation peut être automatisée par implémentation de techniques d'apprentissage automatique (e.g. espérance-maximisation, analyse en composantes principales, apprentissage profond, apprentissage supervisé, carte auto-adaptative, méthode des nuées dynamiques, régression, regroupement hiérarchique, réseau de neurones, apprentissage statistique, etc.).

Dans un mode de réalisation, le procédé peut comprendre une ou plusieurs étapes consistant à inférer de nouvelles connaissances du même type que la source de données fournie.

Il est décrit un produit programme d'ordinateur, ledit programme d'ordinateur comprenant des instructions de code permettant d'effectuer une ou plusieurs des étapes du procédé lorsque ledit programme est exécuté sur un ordinateur.

Il est décrit un système comprenant des moyens pour la mise en oeuvre d'une ou plusieurs des étapes du procédé.

L'invention peut s'implémenter à partir d'éléments matériel et/ou logiciel. Elle peut être disponible en tant que produit programme d'ordinateur sur un support lisible par ordinateur. Le support peut être électronique, magnétique, optique ou électromagnétique. Les moyens ou ressources informatiques peuvent être centralisés et/ou être distribués ("*Cloud computing*"), éventuellement avec ou selon des technologies de pair-à-pair et/ou de virtualisation et/ou de redondance. Le code logiciel peut être exécuté sur n'importe quel processeur approprié (par exemple, un microprocesseur) ou coeur de processeur ou un ensemble de processeurs, qu'ils soient prévus dans un dispositif de calcul unique ou répartis entre plusieurs dispositifs de calcul. La mise en oeuvre informatique de l'invention peut utiliser des systèmes centralisés (e.g. client-serveur ou maître-esclave) et/ou des systèmes distribués (e.g. architecture de type pair-à-pair utilisant des ressources informatiques accessibles, éventuellement de manière opportuniste e.g. réseaux ad hoc, etc.). Le système (ou ses variantes) implémentant une ou plusieurs des étapes du procédé peut utiliser un ou plusieurs circuits électroniques dédiés ou un circuit à usage général. Le procédé peut aussi être mis en oeuvre sur une machine de calcul reprogrammable (un processeur ou un micro contrôleur, par exemple) exécutant un programme comprenant une séquence d'instructions, ou sur une machine de calcul dédiée (par exemple un ensemble de portes logiques comme un FPGA ou un ASIC, ou tout autre module matériel). Un circuit dédié peut notamment améliorer les performances. La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple un logiciel d'application, un micro logiciel, un microcode, APIs, web services, ou toute autre forme d'instruction d'ordinateur) qui peut être utilisé pour programmer un ou plusieurs processeurs pour mettre en oeuvre des étapes du procédé.

## Revendications

1. Procédé de manipulation de données mis en oeuvre par ordinateur, comprenant les étapes consistant à :
- recevoir (410) des données depuis une ou plusieurs sources de données (100) ;
- modifier (420) les données reçues dans un ou plusieurs accesseurs sémantiques (111, 112, 113) associés à un système à base de connaissances (120), le système à base de connaissances étant extensible par une ou plusieurs extensions (121, 122, 123), une extension spécifiant du vocabulaire comprenant des objets (1111) et un ou plusieurs opérateurs logiques (1112) ;
- associer des objets entre eux par l'intermédiaire d'un ou plusieurs modèles (1101, 1102, 1103) ;
- interroger les sources de données (440) par l'intermédiaire d'un système de requêtes (1110).

2. Procédé selon la revendication 1, l'étape consistant à modifier (420) les données dans un ou plusieurs accesseurs sémantiques (111, 112, 113) comprenant les étapes consistant à modifier le fond et/ou la forme des données reçues ou d'une copie des données reçues.

3. Procédé selon la revendication 2, l'étape consistant à modifier (420) le fond des données comprenant une ou plusieurs étapes parmi les étapes consistant à sélectionner, filtrer, ajouter, supprimer, substituer une ou plusieurs données parmi les données reçues et/ou l'étape consistant à modifier la forme des données comprenant une ou plusieurs étapes parmi les étapes consistant à convertir, formater, transcoder, encoder, décoder, compresser, ou décompresser une ou plusieurs données parmi les données reçues.

4. Procédé selon l'une quelconque des revendications précédentes, comprenant en outre l'étape consistant à stocker (430) tout ou partie des données modifiées dans le système à base de connaissances (120).

5. Procédé selon l'une quelconque des revendications précédentes, comprenant les étapes consistant à modifier et/ou ajouter et/ou à supprimer un ou plusieurs opérateurs logiques et/ou un ou plusieurs objets dans une ou plusieurs extensions, un opérateur logique étant un opérateur logique selon la logique binaire, logique floue, la logique possibiliste, la logique intuitionniste, la logique combinatoire, la logique modale, la logique propositionnelle, la logique polyvalente ou multivalente, la logique partielle, ou la logique para-consistante.

6. Procédé selon l'une quelconque des revendications précédentes, plusieurs versions du système à base de connaissances étant sauvegardées au cours du temps.

7. Procédé selon l'une quelconque des revendications précédentes, comprenant en outre les étapes consistant à :
- afficher (450) une règle d'un accesseur et/ou d'une extension, une règle comprenant un ou plusieurs objets reliés par un ou plusieurs opérateurs logiques ;
- effectuer une analyse syntaxique de la règle ;
- déterminer un ou plusieurs emplacements pour compléter la règle ;
- afficher les emplacements déterminés et/ou afficher des objets et/ou des opérateurs logiques prédéfinis compatibles avec les emplacements déterminés.

8. Procédé selon la revendication 1, comprenant une pluralité d'accesseurs sémantiques modifiant les données reçues en série ou mis en concurrence modifiant les données reçues en parallèle.

9. Procédé selon l'une quelconque des revendications précédentes, les sources de données (100) comprenant des fichiers au format IFC, les objets comprenant ou traduisant des hiérarchies entre lesdits objets, les opérateurs logiques comprenant des opérateurs traduisant des relations spatiales, la logique implémentée dans le moteur d'inférences (124) et/ou au moins un opérateur logique étant de type logique floue, et un graphe d'adjacence étant utilisé pour associer entre eux des objets dans un ou plusieurs modèles (1101, 1102, 1103).

10. Procédé selon l'une quelconque des revendications précédentes, les sources de données (100) comprenant des images, les objets comprenant des mots prédéfinis pour décrire le contenu desdites images.

11. Procédé selon la revendication 10, les sources de données (100) comprenant des données médicales de type Imagerie par Résonance Magnétique ou IRM, les objets comprenant des mots prédéfinis pour décrire spécifiquement le contenu desdites images IRM.

12. Procédé selon l'une quelconque des revendications précédentes, les sources de données (100) comprenant des informations de type géographique, les objets comprenant des mots prédéfinis notamment de type géométrique, et les opérateurs logiques comprenant des opérateurs de type proximité spatiale.

13. Procédé selon l'une quelconque des revendications précédentes, les sources de données (100) comprenant des informations relatives à des signaux, les objets correspondant à des catégories de signaux prédéfinies.

14. Produit programme d'ordinateur, ledit programme d'ordinateur comprenant des instructions de code permettant d'effectuer les étapes du procédé selon l'une quelconque des revendications 1 à 13, lorsque ledit programme est exécuté sur un ordinateur.

15. Système de manipulation de données comprenant :
- une ou plusieurs sources ou bases de données comprenant des données ;
- un ou plusieurs ordinateurs configurés pour :
- recevoir (410) des données depuis une ou plusieurs sources de données (100) ;
- modifier (420) les données reçues dans un ou plusieurs accesseurs sémantiques (111, 112, 113) associés à un système à base de connaissances 120, le système à base de connaissances comprenant ou étant extensible par une ou plusieurs extensions (121, 122, 123), une extension spécifiant du vocabulaire comprenant des objets (1111) et un ou plusieurs opérateurs logiques (1112) ;
- associer des objets entre eux par l'intermédiaire d'un ou plusieurs modèles (1101, 1102, 1103) ;
- interroger les sources de données (440) par l'intermédiaire d'un système de requêtes (1110).
